# EUROPÄISCHE PATENTSCHRIFT

(11) **EP 4 355 632 B1**
(45) Veröffentlichungstag und Bekanntmachung des Hinweises auf die Patenterteilung: **17.12.2025**
(21) Anmeldenummer: 22731058.8
(22) Anmeldetag: 30.05.2022
(51) Int. Cl.: H04B 5/26, H01F 27/28, H01Q 7/00, H01F 38/14, B61L 15/00

(54) **MODUL MIT INTEGRIERTER WLAN ETHERNET DATENSCHNITTSTELLE**
MODULE WITH AN INTEGRATED WLAN ETHERNET DATA INTERFACE
MODULE AVEC INTERFACE DE DONNÉES ETHERNET WLAN INTÉGRÉE

(30) Priorität: 14.06.2021 DE 102021115310
(43) Veröffentlichungstag der Anmeldung: 24.04.2024
(73) Patentinhaber: Harting Customised Solutions GmbH & Co. KG, 32339 Espelkamp (DE)
(72) Erfinder: HAVERMANN, Gert, 32339 Espelkamp (DE); WIEHE, Matthias, 32339 Espelkamp (DE); HILLA, Mirco, 32339 Espelkamp (DE); KRAUSE, Jens, 32339 Espelkamp (DE); DROSTE, Michael, 32339 Espelkamp (DE)
(86) Internationale Anmeldenummer: PCT/DE2022/100405
(87) Internationale Veröffentlichungsnummer: WO 2022/262898

(56) Entgegenhaltungen:
- DE-A1- 102011 079 551
- DE-A1- 102016 205 586
- DE-A1- 102019 118 712
- TW-A- 200 701 558

## Beschreibung

Die Erfindung betrifft ein mit einer WLAN Ethernet Datenschnittstelle versehenes Modul eines Modulträgers. Die Erfindung betrifft dabei insbesondere außerdem eine für das Modul geeignete Antenne, sowie ein für einen Steckverbinder und/oder eine Elektrokupplung geeignetes Modul.

Steckverbindermodule werden benötigt um modulare Steckverbinder aufzubauen. Dabei beherbergen die Steckverbindermodule modulare Kontakteinsätze und mehrere, gleich- oder verschiedenartige Kontakteinsätze aufweisende Steckverbindermodule werden zu einem Steckverbinder vereinigt. Der Steckverbinder kann so mit einem hohen Grad an Flexibilität zusammengestellt und konfiguriert werden.

Steckverbindermodule werden dabei entweder direkt in ein Steckverbindergehäuse eingesetzt oder zuerst in einen Modulrahmen eingesetzt und fixiert. Der Modulrahmen wird dann mit den in ihm aufgenommenen Steckverbindermodulen in das Steckverbindergehäuse montiert.

Steckverbindermodule für modulare Steckverbinder sind in einer Vielzahl aus dem Stand der Technik bekannt. Sie variieren in Ihrer Größe, Anzahl von aufgenommenen Kontaktmitteln, Dimensionierung der Kontaktmittel und Art der Kontaktmittel. Je nach Ausgestaltung des Steckverbindermoduls sind diese für die Übertragung von zum Beispiel Signalen und Strömen digitaler, analoger, elektrischer, pneumatischer, mechanischer, optischer oder hydraulischer Art einsetzbar.

Mit zunehmender Digitalisierung wird es notwendig, eine stetig wachsende Informationsmenge zu übertragen. Schnittstellen für hochfrequente Signal- und Datenübertragung können durch Steckverbindungen realisiert werden, wie sie beispielsweise von Ethernet-Kabeln bekannt sind. Derartige Steckverbinder sind jedoch in vielen insbesondere industriellen Bereichen und im Outdoor-Bereich nicht geeignet, da sie durch unvermeidbare Verschmutzungen bei ihrem Einsatz sehr schnell funktionsunfähig würden.

Aus dem Stand der Technik ist daher beispielsweise bei einer Elektrokupplung für Eisenbahnen bekannt, die hochfrequente Datenübertragung mittels einer Funkverbindung von einem Wagen zum nächsten bzw. vom Triebwagen eines Zugteils zum Triebwagen eines zweiten Zugteils herzustellen.

### Stand der Technik

Beispielsweise in der EP 3 011 643 B1 ist ein Halterahmen für Steckverbindermodule beschrieben, in den mehrere, verschiedene Steckverbindermodule beliebig kombiniert eingesetzt werden können, um einen modular aufgebauten Steckverbinder bereitstellen zu können. Der Halterahmen hält die Steckverbindermodule zusammen und fixiert diese zueinander. Anschließend kann der Halterahmen in ein Steckverbindergehäuse eingesetzt und in diesem fixiert werden.

Der Steckverbinder kann mit einem passenden, ebenfalls modularen Gegensteckverbinder verbunden werden. Alternativ kann der Halterahmen als sogenannter Anbaurahmen an eine Gehäuse- oder Gerätewand eingesetzt und befestigt werden.

Mit dieser Art von modularen Steckverbindern ist eine Vielzahl individueller Steckverbinder kombinierbar und zusammenstellbar.

Es werden hierfür verschiedene, standardisierte Steckverbindermodule benötigt.

Aus der EP 2 616 304 B1 ist eine Elektrokupplung für Eisenbahnen, mit einem ersten und einem zweiten Kupplungsteil bekannt, die jeweils einen Träger aufweisen, in dem mehrere Koppelteile angeordnet sind, mit denen eine elektrische, pneumatische und/oder hydraulische Kopplung von einem Kupplungsteil zum anderen Kupplungsteil hergestellt werden kann, wobei eine Hochfrequenzkopplung vorgesehen ist. Die Hochfrequenzkopplung ist durch eine Antenne in dem einen Kupplungsteil und eine Antenne in dem anderen Kupplungsteil gebildet, wobei die Hochfrequenzkopplung zwei miteinander zusammenwirkende Hochfrequenz-Kopplungsteile aufweist, die jeweils als Kunststoffkörper ausgeführt sind, der die Antenne vollständig umschließt.

Die als Loop-Antenne ausgeführte bekannte Hochfrequenzkopplung ist insbesondere als Ersatz von existierenden Schnittstellen für hochfrequente Signal- und Datenübertragung mittels Steckverbindungen auch bei Elektrokupplung für Eisenbahnen nur nachteilhaft aufwendig nachrüstbar und skalierbar.

Die TW 200 701 558 A zeigt eine Breitbandantenne, die ein Seitenverhältnis einer Schleifenstruktur und eine ungleichmäßige Schleifenlinienbreite verwendet, um breitbandige Betriebseigenschaften zu erreichen und ein quasi omnidirektionales Strahlungsmuster bereitzustellen.

Die DE 10 2016 205 586 A1 zeigt einen Datenbusstecker zur Herstellung einer Datenverbindung zwischen zwei Fahrzeugteilen für die Übertragung von Daten mit einer Datenrate von über 1 Gbit/s.

Die DE 10 2011 079 551 A1 zeigt eine Datenübertragungsvorrichtung, die zur Herstellung einer Datenverbindung zwischen zwei kuppelbaren Fördereinheiten einer Fördervorrichtung, insbesondere zwischen zwei Fahrzeugeinheiten eines Personenfahrzeugs, mit einer ersten Schnittstelle, die einer ersten Fördereinheit zugeordnet ist und im gekuppelten Zustand mit einer zweiten Fördereinheit zur Herstellung der Datenverbindung durch ein Zusammenwirken mit einer zweiten, der zweiten Fördereinheit zugeordneten Schnittstelle, vorgesehen ist.

Die US 2016 / 0 149305 zeigt eine Antennenvorrichtung mit einem Substrat und zwei Rechteckspulen, die auf einer oberen Fläche des Substrats ausgebildet sind.

### Aufgabenstellung

Die Aufgabe der Erfindung besteht darin, eine für viele Anwendungen geeignete WLAN Ethernet Datenschnittstelle bereitzustellen, die insbesondere einfach installierbar und nachrüstbar ist. Hierbei ist außerdem Aufgabe insbesondere eine für die WLAN Ethernet Datenschnittstelle geeignete Antenne bereitzustellen.

Die Aufgabe wird durch die Merkmale der unabhängigen Ansprüche gelöst.

Vorteilhafte Ausführungen der Erfindung sind in den Unteransprüchen und/oder der nachfolgenden Beschreibung angegeben.

Die Erfindung betrifft insbesondere eine Antenne für eine WLAN Ethernet Datenschnittstelle mit einer gedruckten Leiterplatte, auf der Elemente einer Nahfeldantenne als Leiterbahnen ausgebildet sind, und die derart ausgebildet ist, dass sie mit einer zweiten baugleichen Antenne bestimmungsgemäß derart zusammenwirkt, dass eine Hochgeschwindigkeits-Datenübertragung bereitgestellt ist.

Gedruckte Leiterplatten sind kostengünstig insbesondere auch in großen Stückzahlen herstellbar. Die Bereitstellung einer drahtlosen Datenschnittstelle mittels zweier baugleicher miteinander zusammenwirkender Schnittstellen ist herstellungstechnisch ebenfalls von Vorteil und ermöglicht eine einfache Installation in eine Vielzahl von Anwendungen.

Auf einer gedruckten Leiterplatte bereitgestellte Antennen sind auf Grund ihrer im wesentlichen zweidimensionalen Ausbildung außerdem besonders platzsparend und flexibel in Ihrer Anwendung.

Auf der ersten Seite der Leiterplatte der Antenne ist in einem ersten Bereich eine Signalleitung und eine erste und zweite Referenzmasse jeweils mittels geeignet ausgebildeter Leiterbahnen bereitgestellt. Im Anschluss an den ersten Bereich ist die Signalleitung geeigneter Weise in einem zweiten Bereich der Leiterplatte als planare Spule ausgebildet.

Der zweite Bereich der Leiterplatte umfasst dabei einen dritten Bereich zur Bereitstellung eines zur Datenübertragung geeigneten magnetischen Kopplungszustands einer ersten Antenne mit einer baugleichen zweiten Antenne, der besonders vorteilhaft derart ausgebildet ist, dass der magnetische Kopplungszustand mittels einer benachbarten Anordnung des dritten Bereichs der baugleichen ersten und zweiten Antenne bereitgestellt ist.

Die Antenne ist hierfür geeigneter Weise derart ausgebildet, dass der magnetische Kopplungszustand bereitgestellt ist, wenn die beiden benachbarten dritten Bereiche in einem geringen Abstand von 1 bis 10 mm und vorteilhaft etwa 2.5 mm angeordnet sind ohne sich dabei zu berühren.

Die Leiterbahnen auf der Leiterplatte sind dabei insbesondere mit der Signalleitung vorteilhaft derart ausgebildet, dass die beiden Antennen in dem Kopplungszustand jeweils um 180° zueinander gedreht sind. Auch diese Anordnung der Antennen ist besonders platzsparend.

Die Spule der Signalleitung ist hierfür als planare spiralförmige Rechteckspule mit wenigstens einer Windung ausgebildet und kann zur Bereitstellung einer wünschenswert zuverlässigen und leistungsfähigen Kopplung bevorzugt drei bis fünf Windungen aufweisen.

Die Ausbildung der Spule als Rechteckspule gestattet insbesondere eine Erzielung eines wünschenswerten magnetischen Kopplungszustands mittels benachbarter Anordnung jeweils lediglich ausgewählter Bereiche der Spulen der beiden Antennen. Auf diese Weise wird eine Bereitstellung des magnetischen Kopplungszustands platzsparend und einfach ermöglicht.

Geeigneter Weise ist der für die Kopplung vorgesehene dritte Bereich hierfür an einem Rand der Leiterplatte vorgesehen und umfasst dabei einen vorbestimmten zur Bereitstellung der magnetischen Kopplung vorgesehenen Bereich der Spule.

Die Spule ist hierfür geeigneter Weise derart ausgebildet, dass die Windungen der Spule jeweils wenigstens einen ersten Abschnitt parallel zu einer Längsrichtung der Leiterplatte aufweisen und wenigstens einen zweiten Abschnitt quer zu dem ersten Abschnitt aufweisen, wobei der an einem Rand der Leiterplatte vorgesehene dritte Bereich wenigstens einen zweiten Abschnitt und bevorzugt zwei oder drei zweite Abschnitte der Spule umfasst.

Für eine zur WLAN/Ethernet Kompatibilität wünschenswerte Impedanz im Bereich von 50 Ω eines Kabelanschlusses der Antenne erstreckt sich die Signalleitung ausgehend von einem an einem Rand der Leiterplatte angeordneten Kabelanschluss in dem ersten Bereich der Leiterplatte mittig zwischen einer ersten und zweiten Referenzmasse, die geeigneter Weise jeweils benachbart zu gegenüberliegenden längsseitigen Rändern der Leiterplatte angeordnet sind.

Die Leiterplatte mit den vorstehend genannten Rändern ist dabei geeigneter Weise rechteckig ausgebildet, wobei der dritte Bereich und der Kabelanschluss an jeweils gegenüberliegenden breitseitigen Rändern der Leiterplatte vorgesehen sind. Der Kabelanschluss ist geeigneter Weise zum Anschluss eines Koaxialkabels geeignet.

Auf der ersten Seite der Leiterplatte ist zur Bereitstellung einer geeigneten Impedanz des Kabelanschlusses der Antenne in dem ersten Bereich der Leiterplatte eine erste Breite der Signalleitung, ein Abstand der Signalleitung zu der ersten und zweiten Referenzmasse und eine Breite der Referenzmassen jeweils derart ausgebildet, dass der erste Bereich mit der Signalleitung und den Referenzmassen belegt ist.

Geeigneter Weise weist die Signalleitung hierfür in dem ersten Bereich der Leiterplatte eine Breite auf, die etwa ihrem Abstand zu der ersten und zweiten Referenzmasse entspricht, wobei die Breite der Referenzmassen vorteilhaft etwa das 1.2 bis 2-Fache und besonders bevorzugt etwa das 1.5-Fache der Breite der Signalleitung entspricht. Die erste und zweite Referenzmasse sind dabei jeweils flächenhaft in Form eines sich in Längsrichtung der Leiterplatte erstreckenden Rechtecks ausgebildet .

Anders als in dem vorstehenden ersten Bereich ist die Signalleitung in dem zweiten Bereich der Leiterplatte für die Ausbildung einer geeigneten Spule mittels einer schmalen Leiterbahn mit einer Breite von 0.3 mm bis 0.8 mm und bevorzugt von etwa 0.5 mm ausgebildet.

Die ersten Abschnitte der Spule sind dabei geeigneter Weise jeweils in einem ersten Abstand von 0.1 mm bis 0.5 mm und bevorzugt von 0.3 mm angeordnet. Die zweiten Abschnitte der Spule sind zur Bereitstellung einer wünschenswerten magnetischen Kopplung jeweils vorteilhaft in einem zweiten Abstand angeordnet, der das 2 bis 10-Fache und bevorzugt das 5-Fache des ersten Abstands beträgt.

Die Signalleitung erstreckt sich in dem zweiten Bereich geeigneter Weise mit den Windungen ihrer Spule spiralförmig bis zur Mitte der Spule und führt hieran anschließend auf eine gegenüberliegende zweite Seite der Leiterplatte. Die Signalleitung erstreckt sich auf der zweiten Seite in dem zweiten Bereich mittig bis in den ersten Bereich der Leiterplatte, der auf der zweiten Seite der Leiterplatte benachbart zu deren erstem Rand und dem Kabelanschluss zur Bereitstellung einer wünschenswerten Impedanz flächenhaft von einer dritten Referenzmasse belegt ist.

Der zweite Bereich für die Impedanzanpassung kann in der Länge variieren ohne die Funktion zu beeinträchtigen. Bei dem ersten Bereich mit der Antenne sind Größe sowie Abstand zum zweiten Bereich jedoch funktionsentscheidend.

Die Antenne mit den vorstehend beschriebenen Merkmalen ist als Nahfeldantenne zur Kopplung in einem Bereich von 2 bis 3 cm ausgelegt. Die Antenne weist mit diesen Merkmalen am Kabelanschluss eine vorteilhafte Speisepunktimpedanz von 50 Ω auf und ist für einen Frequenzbereich von 5 GHz mit einer Übertragungsrate von 450 MBit/s ausgelegt. Die Antenne ist somit zur Bereitstellung einer Hochgeschwindigkeits-WLAN Ethernet Datenschnittstelle geeignet.

Für eine einfache Montage der Antenne weist die Leiterplatte in dem ersten Bereich benachbart zu dem Kabelanschluss eine erste und zweite durchgehende Bohrung auf, die sich jeweils durch die erste und dritte Referenzmasse und die zweite und dritte Referenzmasse erstrecken. Es ist klar, dass die vorstehenden auf der Leiterplatte vorgesehenen Referenzmassen elektrisch mit einer Referenzmasse des Kabelanschlusses in Verbindung stehen.

Die erste und zweite Bohrung sind dabei zusammen mit jeweils einem ersten und zweiten als Metallhülse ausgebildeten Abstandselement zur Montage der Antenne insbesondere in einem geeigneten Gehäuse vorgesehen, bei dem es sich erfindungsgemäß vorteilhaft um ein Modul insbesondere etwa eines Steckverbinders handeln kann.

Die Erfindung betrifft demnach insbesondere außerdem ein Modul mit integrierter WLAN Ethernet Datenschnittstelle mit einer geeigneten Antenne, das zum Einsatz in einen Modulträger und somit für viele Anwendungen geeignet ist.

Die Antenne ist vorteilhaft derart in dem Modul angeordnet, dass sie um einen vorbestimmten Betrag aus einer Öffnung des Moduls herausragt, und dass mittels eines ersten Moduls mit einer ersten Antenne und eines um 180° gedrehten zweiten baugleichen Moduls mit einer zweiten Antenne, das in einer Ebene benachbart zu dem ersten Modul angeordnet ist, der magnetische Kopplungszustand der Antennen mittels einer benachbarten Anordnung der aus der Öffnung des Moduls herausragenden Bereiche der ersten und zweiten Antenne bereitgestellt ist.

Bei der Antenne des Moduls kann es sich geeigneter Weise um eine planare Antenne und insbesondere um eine vorstehend beschriebene erfindungsgemäße auf einer Leiterplatte bereitgestellte Antenne handeln, wobei der aus der Öffnung des Moduls herausragende Bereich der dritte Bereich der Antenne ist.

Die Antenne ist hierfür geeigneter Weise mit ihrer Leiterplatte von einem zentralen Bereich der Öffnung derart beabstandet in dem Modul angeordnet, dass die Antennen der Module insbesondere in ihrem Kopplungszustand jeweils parallel zu der Ebene der Module angeordnet sind. Die vorstehend beschriebenen dritten Bereiche der Antennen sind dabei benachbart zueinander in einem Abstand von 1 bis 10 mm und vorteilhaft von etwa 2.5 mm berührungslos angeordnet.

Das Modul weist für eine vorstehende Positionierung der Antenne in dem Modul ein hierfür geeignetes Gehäuse und ein Schirmungselement auf.

Das Schirmungselement besteht vorteilhaft aus Metall. Die Antenne ist geeigneter Weise über ihre Bohrungen durch die Referenzmassen und die Abstandselemente in dem Schirmungselement derart befestigt, dass die Referenzmassen der Antenne und eine Referenzmasse des Kabelanschlusses der Antenne elektrisch mit dem Schirmungselement verbunden sind.

Das Gehäuse des Moduls besteht geeigneter Weise aus Kunststoff und weist eine Innenkontur auf, die mit einer Außenkontur des Schirmungselements formschlüssig derart zusammenwirkt, dass das Schirmungselement in dem Gehäuse beherbergt und gehalten ist. Das Gehäuse weist geeigneter Weise eine Außenkontur auf, die mit einer Kontur des Modulträgers korrespondiert.

Für eine besonders genaue, zuverlässige und sichere Positionierung der Antenne in dem Modul und für einen besonders sicheren Einsatz des Moduls auch im Outdoor-Bereich weist das Modul ein Positionierungselement und/oder eine Schutzkappe auf, die nachfolgend unter Bezugnahme auf die Zeichnungen detailliert beschrieben sind.

Das vorstehend beschriebene Modul ist besonders geeignet zur Verwendung zusammen mit weiteren baugleichen Modulen und/oder weiteren Modulen in einem Steckverbinder, wobei der Modulträger ein mit dem Modul korrespondierender Halterahmen des Steckverbinders ist.

Ein Halterahmen eines Steckverbinders kann zur Aufnahme einer Vielzahl von Modulen ausgelegt sein, wonach der Halterahmen auch mehr als ein vorstehend beschriebenes Modul mit integrierter WLAN Ethernet Datenschnittstelle aufnehmen kann.

Mittels Vorsehung von mehr als einem derartigen Modul kann eine Datenübertragungsrate einer Hochgeschwindigkeits-WLAN Ethernet Datenübertragung auf einfache Weise skaliert werden. Mit drei Modulen, die jeweils für eine Datenübertragungsrate von 450 MBit/s ausgelegt sind, kann auf diese Weise eine Datenübertragungsrate von mehr als 1 GBit/s erzielt werden. Geeigneter Weise können die Module hierbei jeweils für einen Frequenzkanal eines Frequenzbands verwendet werden.

Das vorstehend beschriebene Modul ist außerdem besonders geeignet zur Verwendung zusammen mit weiteren baugleichen Modulen und/oder weiteren Modulen in einer Elektrokupplung eines Kupplungsteils einer Kupplung, die zwischen zwei miteinander verbundenen Zugabschnitten vorgesehen ist, wobei der Modulträger Bestandteil der Elektrokupplung ist.

Auch in der Elektrokupplung kann wie in einem Steckverbinder mehr als ein vorstehendes Modul vorgesehen sein, wonach mittels dem Modul eine wünschenswerte Datenübertragungsrate auf einfache Weise skaliert werden kann.

Das vorstehend beschriebene Modul ist insbesondere als Ersatz von existierenden Schnittstellen für hochfrequente Signal- und Datenübertragung mittels Steckverbindungen auch bei Elektrokupplung für Eisenbahnen geeignet und dabei auf einfache Weise nachrüstbar und skalierbar.

Weitere Merkmale und Vorteile insbesondere des vorstehend beschriebenen Moduls sind nachfolgend unter Bezugnahme auf die begleitenden Zeichnungen beschrieben.

### Ausführungsbeispiele

Ausführungsbeispiele der Erfindung sind in den Zeichnungen dargestellt und werden im Folgenden näher erläutert. Es zeigen:
- Fig. 1A: eine Antenne nach einer Ausführung der Erfindung im Kopplungszustand mit einer zweiten Antenne;
- Fig. 1B: die Spulen der Antennen von Fig. 1A aus einer anderen Perspektive;
- Fig. 2: eine Explosionsdarstellung eines Moduls nach einer Ausführung der Erfindung zusammen mit einer vergrößerten Darstellung der Antenne des Moduls aus einer anderen Perspektive;
- Fig. 3A: zwei zusammengesetzte Module von Fig. 2 im Kopplungszustand ihrer Antennen;
- Fig. 3B: drei Module in einem Modulträger;
- Fig. 4: eine vergrößerte Darstellung des Schirmungselements des Moduls von Fig. 2 aus einer anderen Perspektive mit der Antenne in das Schirmungselement eingesetzt;
- Fig. 5A: das Schirmungselement mit der Antenne eingesetzt in das Gehäuse des Moduls von Fig. 2;
- Fig. 5B: das Modul von Fig. 5A mit einer Schutzkappe versehen;
- Fig. 6A: zwei Module von Fig. 5B im Kopplungszustand ihrer Antennen;
- Fig. 6B: einen Längsschnitt durch die Module von Fig. 6A;
- Fig. 7A: zwei Zugabschnitte mit einer dazwischen angeordneten Kupplung; und
- Fig. 7B: eine schematische Darstellung einer Elektrokupplung der Kupplung von Fig. 7A.

Die Figuren enthalten teilweise vereinfachte, schematische Darstellungen. Zum Teil werden für gleiche, aber gegebenenfalls nicht identische Elemente identische Bezugszeichen verwendet. Nicht alle Bezugszeichen sind in allen Zeichnungen angegeben. Verschiedene Ansichten gleicher Elemente können unterschiedlich skaliert sein.

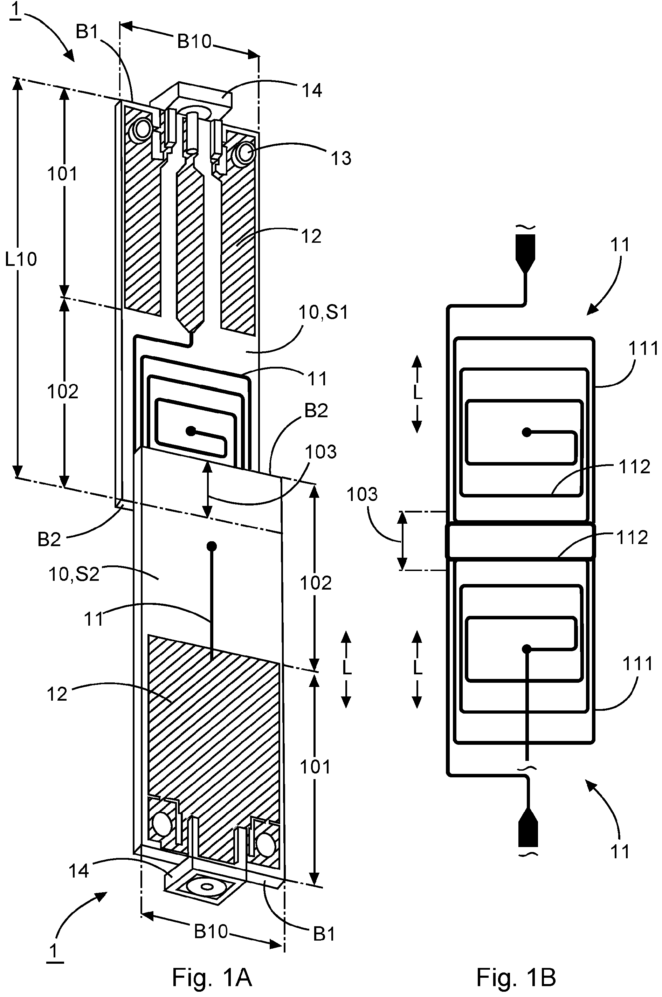

Fig. 1A zeigt eine Antenne 1 nach einer Ausführung der Erfindung im Kopplungszustand mit einer zweiten baugleichen Antenne 1. Die Antenne 1 weist eine rechteckige Leiterplatte 10 mit einer Länge L10 und einer Breite B10 auf. An einem breitseitigen ersten Rand B1 der Leiterplatte 10 ist ein an dem Rand B1 mittig angeordneter Kabelanschluss 14 für ein Koaxialkabel vorgesehen, von dem ausgehend sich auf einer Seite S1 der Leiterplatte 10 eine Signalleitung 11 in Längsrichtung L der Leiterplatte 10 parallel zu den beiden längsseitigen Rändern der Leiterplatte 10 erstreckt.

Die Signalleitung 11 erstreckt sich in einem ersten Bereich 101 der Leiterplatte 10 mittig zwischen zwei Referenzmassen 12, die sich wie die Signalleitung 11 ebenfalls ausgehend von dem Kabelanschluss 14 in Längsrichtung L parallel zu den beiden längsseitigen Rändern der Leiterplatte 10 erstrecken. Die beiden Referenzmassen 12 sind dabei benachbart zu den beiden längsseitigen Rändern der Leiterplatte 10 angeordnet.

In dem ersten Bereich 101 ist eine erste Breite der Signalleitung 11, ein Abstand der Signalleitung 11 von den Referenzmassen 12 und eine zweite Breite der Referenzmassen 12 jeweils derart ausgebildet, dass der erste Bereich 101 mit der Signalleitung 11 und den Referenzmassen 12 belegt ist. Die Signalleitung 11 weist in diesem Bereich eine Breite von etwa 3 mm und einen Abstand zu den Referenzmassen 12 von etwa 2 mm auf. Die Breite der Referenzmassen 12 ist größer als die Breite der Signalleitung 11 und entspricht etwa 4,5 mm. Insbesondere die Referenzmassen 12 sind dabei flächenhaft in Form eines sich in Längsrichtung L der Leiterplatte 10 erstreckenden Rechtecks ausgebildet.

Die Signalleitung ist 3mm breit, der Abstand zu den ersten und zweiten Referenzmassen ist 2mm und die Breite der Referenzmassen ist 4,3mm. Das alles, zusammen mit der Leiterplattendicke von ungefähr 1,6mm und einem Standard-Leiterplattenmaterial ergibt 50ohm Impedanz. Die Angabe von einzelnen der Aufgeführten Eigenschaften zueinander hat keine zielführende Impedanzangabe zur Folge.

Benachbart zu dem Anschluss 14 weist die Leiterplatte 10 an den Referenzmassen 12 jeweils eine Bohrung auf, an der auf der Seite S1 der Leiterplatte 10 jeweils ein Abstandselement 13 angeordnet ist. Die Bohrungen und die Abstandselemente 13 sind zur Befestigung und Positionierung der Leiterplatte 10 insbesondere in einem nachfolgend beschriebenen Modul M vorgesehen.

Der vorstehend beschriebene erste Bereich 101 erstreckt sich in Längsrichtung L etwa bis zur Mitte der Leiterplatte 10. An den ersten Bereich 101 schließt dort ein zweiter Bereich 102 der Leiterplatte 10 an. Es ist klar, dass die Signalleitung 11 und die Referenzmassen 12 jeweils als Leiterbahnen auf der Leiterplatte 10 ausgebildet sind, die in dem ersten Bereich 101 eine vorstehend beschriebene flächenhafte Ausdehnung aufweisen.

In dem zweiten Bereich 102 ist die Signalleitung 11 sehr viel schmäler als rechteckige, planare und spiralförmige Spule 11 ausgebildet, die bei dieser Ausführung der Antenne 1 vier Windungen aufweist. Die Windungen der Spule 11 weisen dabei jeweils erste 111 und zweite 112 Abschnitte auf, die senkrecht zueinander ausgebildet sind. Die Abschnitte 111 sind dabei jeweils parallel zueinander und zur Längsrichtung L der Leiterplatte 10 angeordnet.

Bei dieser Ausführung der Antenne 1 ist die Spule 11 derart ausgebildet, dass die ersten Abschnitte 111 der ersten Windung der Spule 11 benachbart zu den beiden gegenüberliegenden längsseitigen Rändern der Leiterplatte 10 angeordnet sind. Hierbei ist ein zweiter Abschnitt 112 der ersten Windung der Spule 11 parallel und benachbart zu dem dem Kabelanschluss 14 gegenüberliegenden Rand B2 der Leiterplatte 10 angeordnet.

Die Signalleitung 11 erstreckt sich ausgehend von ihrer vorstehend beschriebenen ersten Windung in dem zweiten Bereich 102 mit den Windungen ihrer Spule 11 spiralförmig bis zur Mitte der planaren spiralförmigen Spule 11 und führt hieran anschließend auf die andere Seite S2 der Leiterplatte 10. Auf der Seite S2 erstreckt sich die Signalleitung 11 in dem Bereich 102 mittig in Längsrichtung L bis in den ersten Bereich 101, der benachbart zu dem ersten Rand B1 der Leiterplatte 10 und dem Antennenanschluss 14 flächenhaft von einer dritten Referenzmasse 12 belegt ist. Der erste 101 und zweite 102 Bereich sind bei dieser Ausführung der Antenne 1 geeigneter Weise etwa gleich groß.

Die beiden Antennen 1 von Fig. 1A sind wie vorstehend gesagt in ihrem Kopplungszustand angeordnet und dabei jeweils mit ihrem dem Kabelanschluss 14 gegenüberliegenden Bereich 103 benachbart übereinander angeordnet. Dabei sind jeweils deren erste Seiten S1 mit den Spulen 11 benachbart zueinander angeordnet und die Antennen 1 quer zur Längsrichtung L um 180° zueinander gedreht. Geeigneter Weise sind die Antennen 1 dabei ohne sich zu berühren in einem möglichst geringen Abstand angeordnet, der beispielsweise etwa der Dicke ihrer Leiterplatte 10 entsprechen kann. Bei den Leiterplatten 10 kann es sich geeigneter Weise um Standardleiterplatten mit einer Dicke von 1.6 mm handeln.

Fig. 1B zeigt hierzu die Spulen 11 der Antennen 1 von Fig. 1A aus einer anderen Perspektive mit den benachbart übereinander angeordneten Spulen 11, die jeweils die ersten 111 und zweiten 112 Windungsabschnitte aufweisen, wobei bei dieser Ausführung der Antenne 1 insbesondere jeweils zwei zweite Windungsabschnitte 112 derart angeordnet sind, dass insbesondere eine magnetische Kopplung bereitgestellt ist.

Geeigneter Weise ist hierfür die Signalleitung 11 der Spule 11 mittels einer Leiterbahn mit einer Breite von 0.3 mm bis 0.8 mm und bevorzugt von etwa 0.5 mm gebildet. Die ersten Abschnitte 111 sind hierbei geeigneter Weise jeweils in einem Abstand von 0.1 mm bis 0.5 mm und bevorzugt von etwa 0.3 mm angeordnet, während der Abstand der zweiten Abschnitte 112 insbesondere in dem für die Kopplung interessierenden Bereich 103 vergleichsweise größer ist und bevorzugt etwa das 5-Fache des Abstands der ersten Abschnitte 111 beträgt. Bei dieser Ausführung beträgt der Abstand der zweiten Abschnitte 112 geeigneter Weise etwa 1.5 mm.

Der Abstand der Leiterbahnen im Bereich 112 beträgt ca. 1,5mm und ist damit ca. 5 mal größer als der Abstand im Bereich 111 (der 0,28mm beträgt). Die Leiterbahnbreite beträgt 0,52mm.

Der Bereich 103 ist bei dieser Ausführung der Erfindung beispielhaft derart ausgelegt, dass ein für eine hochfrequente Übertragung geeigneter magnetischer Kopplungszustand der Antennen 1 mit jeweils zwei benachbart zueinander angeordneten zweiten Abschnitten 112 der Spule 11 bereitgestellt ist, nämlich mittels eines zweiten Abschnitts 112 der ersten Windung der Spule 11 und eines zu diesem Abschnitt 112 benachbarten zweiten Abschnitts 112 der zu der ersten Windung der Spule 11 benachbarten Windung. Es ist klar, dass der Bereich 103 auch vorteilhaft derart ausgelegt sein kann, dass ein für eine hochfrequente Übertragung geeigneter Kopplungszustand der Antennen 1 mittels mehr als zwei benachbart zueinander angeordneter zweiter Abschnitte 112 der Spule 11 bereitgestellt ist.

Die Antenne 1 mit den vorstehend beschriebenen Merkmalen ist als Nahfeldantenne zur Kopplung in einem Bereich von 2 bis 3 cm ausgelegt und für eine Hochgeschwindigkeits-WLAN Ethernet Datenschnittstelle geeignet. Die Antenne 1 mit diesen Merkmalen weist dabei eine Impedanz ihres Kabelanschlusses von 50 Ω auf und ist für einen Frequenzbereich von 5 GHz mit einer Übertragungsrate von 450 MBit/s ausgelegt. Eine vorstehende Antenne 1 ist besonders geeignet zur Integration in ein nachfolgend beschriebenes Modul M.

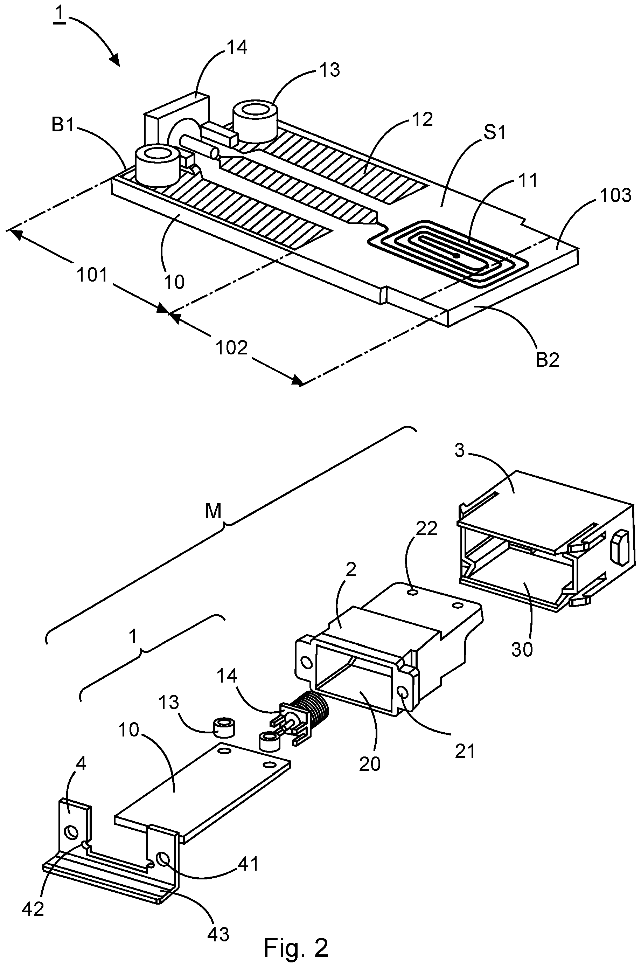

Fig. 2 zeigt eine Explosionsdarstellung eines Moduls M nach einer Ausführung der Erfindung mit einem Modulgehäuse 3, einem Schirmungselement 2, einer Antenne 1 und einem Positionierungselement 4.

Die Leiterplatte 10 der Antenne 1 ist in der Explosionsdarstellung lediglich schematisch dargestellt, weshalb die Antenne 1 außerdem mit ihrer Leiterplatte 10, ihrem Kabelanschluss 14 und den beiden Abstandselementen 13 bestimmungsgemäß zusammengesetzt aus einer anderen Perspektive vergrößert dargestellt. Die Ausführung der Antenne 1 von Fig. 2 entspricht im Wesentlichen der vorstehend beschriebenen Ausführung der Antenne 1 von Fig. 1A, weshalb diesbezüglich auf deren entsprechende Beschreibung verwiesen wird.

Im Unterschied zu der Ausführung von Fig. 1A ist die Spule 11 schmaler ausgebildet, und die beiden längsseitigen Ränder der Leiterplatte 10 weisen insbesondere in dem Bereich 103 jeweils eine Abstufung auf, wonach der Bereich 103 der Leiterplatte 10 entsprechend verjüngt ausgebildet ist. Die vorstehende Verjüngung ist in der Explosionsdarstellung mit der schematischen Leiterplatte 10 der Einfachheit halber nicht dargestellt ist.

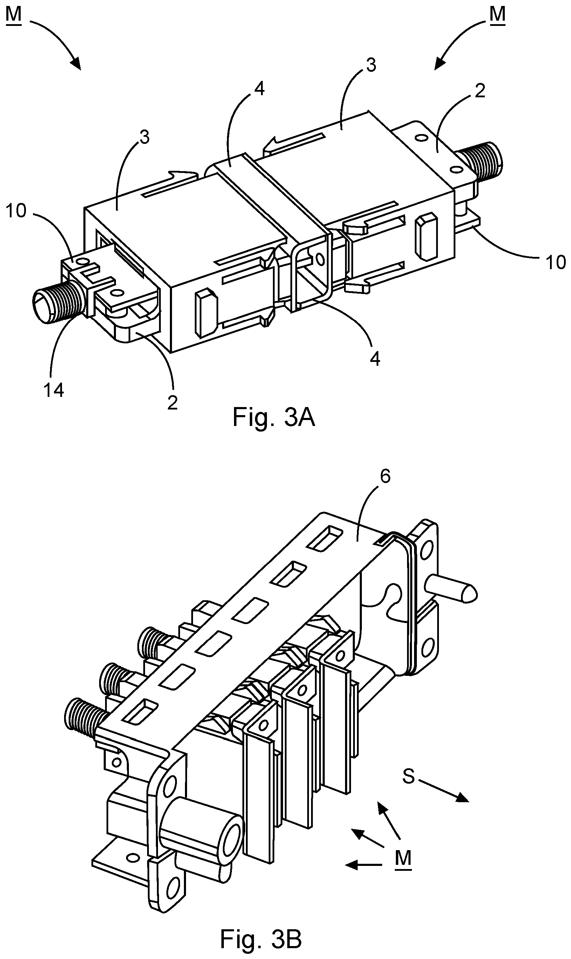

Das Modul M ist mit seinem Gehäuse 3 für einen geeigneten Modulträger 6 vorgesehen und entsprechend ausgebildet. Der Modulträger 6 kann insbesondere ein Halterahmen 6 insbesondere eines Steckverbinders sein. Das Gehäuse 3 weist hierfür eine mit dem Halterahmen 6 formschlüssig korrespondierende Außenkontur mit geeigneten Rast- und Halteelementen auf. Das zusammengesetzte in den Halterahmen 6 eingesetzte Modul M wird nachfolgend unter Bezugnahme auf Fig. 3B beschrieben.

Das Gehäuse 3 weist eine Öffnung 30 und eine Innenkontur auf, die mit der Außenkontur des Schirmungselements 2 formschlüssig derart zusammenwirkt, dass das über die Öffnung 30 in das Gehäuse 3 eingeführte Schirmungselement 2 bestimmungsgemäß in dem Gehäuse 3 beherbergt und gehalten ist. Das Gehäuse 3 besteht geeigneter Weise aus Kunststoff.

Das Schirmungselement 2 besteht geeigneter Weise aus Metall und weist wie vorstehend gesagt eine mit der Innenkontur des Gehäuses 3 formschlüssige Außenkontur auf. Das Schirmungselement 2 stellt für die Aufnahme und Beherbergung der Antenne 1 in das Modul M ein geeignetes Trägerelement bereit.

Das Schirmungselement 2 weist hierfür eine Öffnung 20 und zwei Gewindebohrungen 22 auf, die mit den an den Bohrungen der Leiterplatte 10 vorgesehenen Abstandselementen 13 derart korrespondieren, dass die Leiterplatte 10 einer über die Öffnung 20 in das Schirmungselement 2 eingeführten Antenne 1 mittels in den Zeichnungen nicht dargestellter, durch die Bohrungen der Leiterplatte 10 und die Abstandselemente 13 geführter Schrauben bestimmungsgemäß an den Gewindebohrungen und in dem Schirmungselement 2 positioniert und befestigt werden kann. Die Abstandselemente 13 sind hierfür geeigneter Weise als Metallhülsen ausgebildet, so dass dabei ein elektrischer Kontakt der Referenzmassen 12 der Antenne 1 und des Kabelanschlusses 14 mit dem Schirmungselement 2 bereitgestellt ist.

Es ist klar, dass das Schirmungselement 2 sowie das Gehäuse 3 außerdem jeweils eine gegenüber den Öffnungen 20 und 30 vorgesehene rückseitige Öffnung aufweisen, über die die vorstehend beschriebenen Schrauben sowie der Anschluss 14 für einen Kabelanschluss jeweils zugänglich sind. Der Anschluss 14 ist hierfür geeigneter Weise als SMA Schraubanschluss ausgebildet und somit insbesondere für ein Koaxialkabel geeignet.

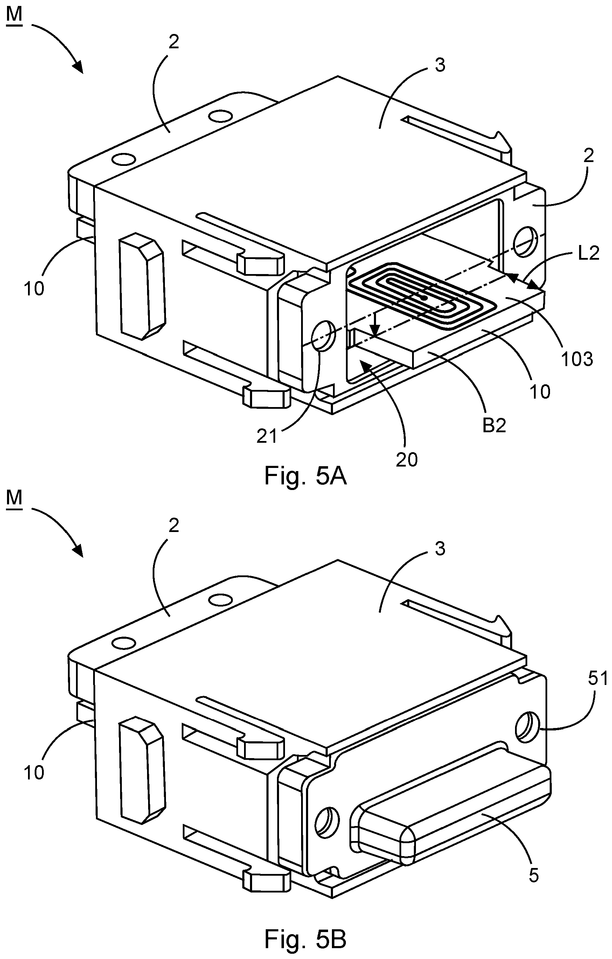

Das Schirmungselement 2 ist an seiner Öffnung 20 außenseitig flanschartig mit zwei Gewindebohrungen 21 ausgebildet, die für eine Befestigung weiterer Elemente wie des Positionierungselements 4 und/oder einer nachfolgend unter Bezugnahme auf Fig. 5B beschriebenen Schutzkappe 5 geeignet sind.

Das Positionierungselement 4 stellt eine schienenartige Führung und Positionierung der Antenne 1 bereit und ist mit seinen beiden Ausnehmungen 42 zur Aufnahme der Leiterplatte 10 entsprechend ausgebildet. Das Positionierungselement 4 ist mit seinen beiden Bohrungen 41 zur Befestigung an dem flanschartigen Rand der Öffnung 20 des Schirmungselements 2 vorgesehen, und kann mit entsprechenden nicht dargestellten Schrauben über die Bohrungen 41 und die Gewindebohrungen 21 an dem Schirmungselement 2 bestimmungsgemäß befestigt werden.

Das Positionierungselement 4 weist außerdem einen abgewinkelten Bereich 43 mit einer Abmessung auf, die im Wesentlichen einer vorbestimmten Länge entspricht, mit der die Leiterplatte 10 der in dem Schirmungselement 2 montierten Antenne 1 insbesondere mit ihrem für die Kopplung vorgesehenen Bereich 103 aus der Öffnung 20 des Schirmungselements 2 herausragt. Die Abwinklung 43 ist dabei zum seitlichen Schutz der Leiterplatte 10 vorgesehen.

Die Abstandselemente 13 und das Positionierungselement 4 mit seinen Ausnehmungen 42 sind derart ausgelegt, dass die mit einem vorbestimmten für die Kopplung der Antenne 1 vorgesehenen Bereich 103 aus der Öffnung 20 aus dem Modul M herausragende Antenne 1 dabei azentrisch von einen mittleren Bereich der Module M beabstandet ist. Dieser Abstand ist derart ausgelegt, dass ein erstes Modul M und ein zweites baugleiches um 180° gedrehtes Modul M mit ihren aus den Modulen M herausragenden Antennen 1 in einen Kopplungszustand der Antennen 1 bringbar sind, der eine Hochgeschwindigkeits-WLAN Ethernet Datenübertragung gestattet.

Fig. 3A zeigt hierzu zwei zusammengesetzte Module M von Fig. 2 im Kopplungszustand ihrer Antennen 1, wobei in diesem Zustand die Bereiche 103 der Antennen 1 berührungslos benachbart zueinander angeordnet sind und auf zwei gegenüberliegenden Seiten von den abgewinkelten Bereichen 43 der Positionierungselemente 4 geschützt sind. In dieser Zeichnung sind außerdem die bereits vorstehend unter Bezugnahme auf Fig. 2 beschriebene rückseitige Öffnung des Gehäuses 3 mit dem zum Anschluss eines Kabels zugänglichen Kabelanschluss 14 dargestellt, der als SMA Anschluss mit einem Schraubanschluss versehen ist. Die jeweils um 180° zueinander gedrehten baugleichen Module M sind dabei in einer Ebene angeordnet.

Fig. 3B zeigt beispielhaft drei Module M in einem ersten Halterahmen 6, der insbesondere für einen modularen Steckverbinder geeignet ist, und der zur Aufnahme von sechs Modulen ausgelegt ist. Der Halterahmen 6 ist als Gelenkrahmen ausgelegt und in der Zeichnung vereinfacht schematisch dargestellt. Die Außenkontur der Module M korrespondiert derart mit Konturelementen des Halterahmens 6, dass die Module M in dem Halterahmen 6 fixiert sind.

Der Halterahmen 6 kann weitere drei Module aufnehmen, die unterschiedlich ausgebildet sein können, und die für die Übertragung von zum Beispiel Signalen und Strömen digitaler, analoger, elektrischer, pneumatischer, mechanischer, optischer oder hydraulischer Art eingerichtet sein können.

Mittels Vorsehung von mehr als einem Modul M kann eine Datenübertragungsrate einer Hochgeschwindigkeits-WLAN Ethernet Datenübertragung auf einfache Weise skaliert werden. Mit den drei Modulen M, die jeweils für eine Datenübertragungsrate von 450 MBit/s ausgelegt sein können, kann auf diese Weise eine Datenübertragungsrate von mehr als 1 GBit/s erzielt werden. Geeigneter Weise werden die Module M hierbei jeweils für einen Frequenzkanal eines Frequenzbands verwendet.

Der Halterahmen 6 kann bestimmungsgemäß in ein Gehäuse eines Steckverbinders eingesetzt und fixiert werden. Ein zweiter baugleicher Halterahmen 6 kann um 180° gedreht an mit den Positionen der drei Module M korrespondierenden Positionen ebenfalls drei Module M halten, die mit den Modulen M korrespondieren und dabei für deren bestimmungsgemäße Kopplung entsprechend um 180° gedreht sind. Der zweite Halterahmen 6 kann in ein mit dem Steckverbindergehäuse korrespondierendes Gehäuse eine Gegensteckverbinders eingesetzt und fixiert werden.

Die Module M sind derart korrespondierend mit den Halterahmen 6 ausgelegt, dass die in dem ersten und zweiten Halterahmen 6 fixierten Module M bei einer bestimmungsgemäßen Verbindung des Steckverbinders in dessen Steckrichtung S mit dem Gegensteckverbinder die vorstehend unter Bezugnahme von Fig. 3A beschriebene Position eines Kopplungszustands der Antennen 1 der Module M bereitgestellt ist. Die in Steckrichtung S aus den Modulen M herausragenden Bereiche 103 der Leiterplatten 10 sind hierbei mit den Spulen 11 zweier gegenüberliegend angeordneter korrespondierender Module M bestimmungsgemäß benachbart zueinander angeordnet und weisen dabei einen vorbestimmten geringen Abstand auf.

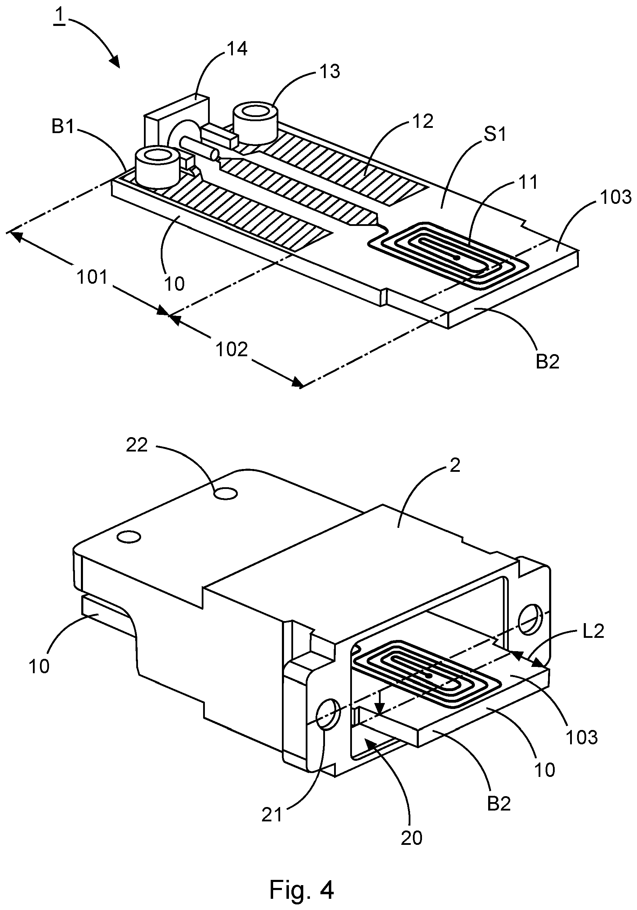

Fig. 4 zeigt zum besseren Verständnis insbesondere des Moduls M eine vergrößerte Darstellung des Schirmungselements 2 des Moduls M von Fig. 2 aus einer anderen Perspektive. Die Antenne 1 von Fig. 2 ist bestimmungsgemäß in das Schirmungselement 2 eingesetzt, weshalb der Klarheit und Übersichtlichkeit halber die Antenne 1 ohne das Schirmungselement 2 in Zusammenschau ebenfalls in Fig. 4 erneut dargestellt ist.

Die Leiterplatte 10 der Antenne 1 ragt in Verbindungsrichtung S des Moduls M mit einem korrespondierenden baugleichen um 180° gedrehten zweiten Modul M um einen vorbestimmten Betrag L2 aus der Öffnung 20 des Schirmungselements 2 heraus, die von dem flanschartigen Rand mit den beiden Gewindebohrungen 21 umgeben ist. Die Leiterplatte 10 ragt außerdem mit ihrem der Öffnung 20 gegenüberliegenden Ende und ihrem Kabelanschluss 14 aus der rückseitigen Öffnung des Schirmungselements 2 heraus.

Benachbart zu dem Kabelanschluss 14 ist die Leiterplatte 10 mittels Schrauben an den Gewindebohrungen 22 des Schirmungselements 2 befestigt, wobei die Leiterplatte 10 über die Abstandselemente 13 bestimmungsgemäß von einem zentralen Bereich der Öffnung 20 beabstandet ist, der in der Zeichnung mit der strichpunktierten Linie dargestellt ist, die sich quer zu der Öffnung 20 und durch die Gewindebohrungen 21 erstreckt.

Die Antenne 1 ist dabei derart in dem Schirmungselement 2 angeordnet, dass ihre Leiterplatte 10 sich parallel zu der Verbindungsrichtung S des Moduls M erstreckt. Der vorstehend beschriebene Abstand von dem zentralen Bereich der Öffnung 20 ist derart vorbestimmt ausgewählt, dass die Leiterplatten 10 zweier in ihrem Kopplungszustand angeordneter Module M benachbart zueinander mit einem vorbestimmten geringfügigen Abstand angeordnet sind und sich dabei nicht berühren.

Es ist klar, dass die Verbindungsrichtung S der Module M zur Bereitstellung ihres Kopplungszustands der Steckrichtung S eines die Module M aufweisenden Steckverbinders entspricht. Die Module M sind mit ihren in den Schirmungselementen 2 positionierten Antennen 1 derart ausgelegt, dass die Leiterplatten 10 der Antennen 1 parallel zu der Verbindungsrichtung S bzw. Steckrichtung S und der Ebene der Module angeordnet sind.

Fig. 5A zeigt zum besseren Verständnis insbesondere des Moduls M eine vergrößerte Darstellung des Schirmungselements 2 mit der Antenne 1 eingesetzt in das Gehäuse 3 des Moduls M von Fig. 2. Das Schirmungselement 2 ragt zusammen mit der Leiterplatte 10 aus der rückseitigen Öffnung des Gehäuses 3 heraus. Lediglich ein oberer und unterer Rand des Gehäuses 3 überragt in Verbindungsrichtung S geringfügig den flanschartigen Rand der Öffnung 20 des Schirmungselements 2.

Fig. 5B zeigt das Modul M von Fig. 5A, dessen Öffnung 20 mit einer Schutzkappe 5 versehen ist. Die Schutzkappe 5 ist aus einem geeigneten Kunststoff bereitgestellt und weist eine vorteilhafte Doppelfunktion auf. Zum einen schützt sie insbesondere den Bereich 103 der Antenne 1 vor Verunreinigung, und außerdem stabilisiert sie wie das Positionierungselement 4 die Leiterplatte 10 in ihrer Position. Hierfür ist die Schutzkappe 5 wie der Rand der Öffnung 20 ebenfalls flanschartig mit zwei Bohrungen 51 ausgebildet, die mit den Gewindebohrungen 21 des Schirmungselements 2 korrespondieren, wonach die Schutzkappe 5 mittels Schrauben an dem Modul M befestigt werden kann. Außerdem korrespondiert die Schutzkappe 5 hierfür in ihrer Form mit der aus der Öffnung 20 herausragenden Leiterplatte 10.

Es ist klar, dass das Modul M auch eine derartige Schutzkappe 5 zusätzlich zu dem Positionierungselement 4 aufweisen kann. Es ist außerdem klar, dass auch die rückseitige Öffnung des Schirmungselements 2 unter Berücksichtigung der Zugänglichkeit des Kabelanschlusses 14 mit einer geeignet ausgebildeten weiteren Schutzkappe versehen sein kann. Es ist ebenfalls klar, dass ein mit der Schutzkappe 5 versehenes Modul M besonders für sensible Bereiche in der Industrie oder für den Outdoor-Bereich geeignet ist.

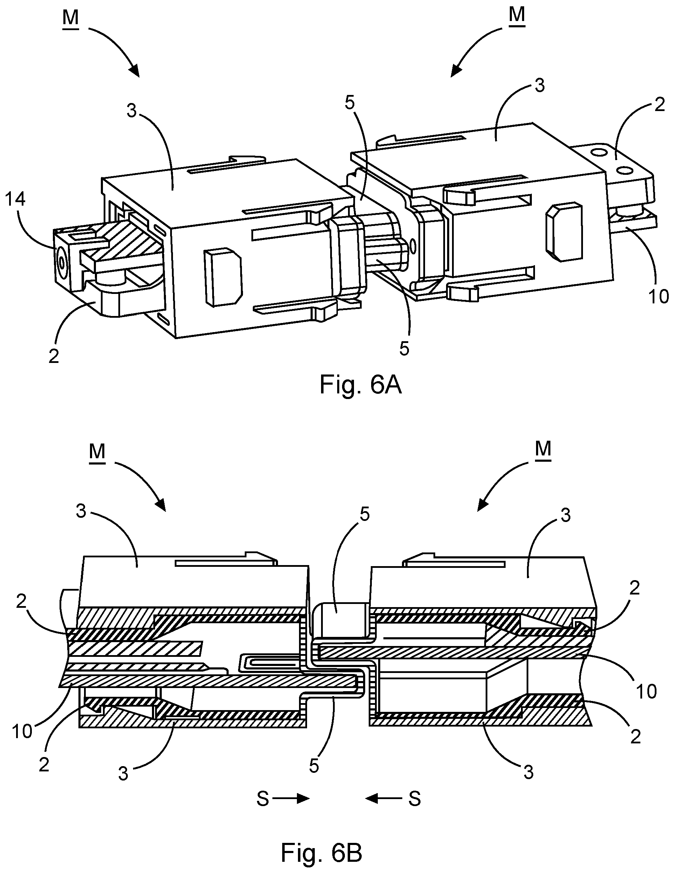

Fig. 6A zeigt zwei Module M von Fig. 5B im Kopplungszustand ihrer Antennen 1 und Fig. 6B zeigt einen Längsschnitt durch die Module M von Fig. 6A.

Fig. 6A entspricht mit den beiden in einer Ebene in Verbindungsrichtung S der Module M benachbart zueinander angeordneten Modulen M im wesentlichen Fig. 3A, weshalb hier diesbezüglich auf die vorstehende Beschreibung verwiesen wird.

Fig. 6B zeigt zunächst das formschlüssig in dem Gehäuse 3 angeordnete Schirmungselement 2. Fig. 6B zeigt insbesondere die Ausbildung der Schutzkappe 5, die mit ihrer Form die Leiterplatte 10 einschließt, wobei die Schutzkappe 5 korrespondierend mit der Leiterplatte 10 ausgebildet ist und von drei Seiten benachbart zu der Leiterplatte 10 angeordnet ist, d.h. benachbart zu der ersten S1 und zweiten S2 Seite und dem korrespondierenden stirnseitigen Rand B2 der Leiterplatte 10.

Die Module M sind dabei in ihrem Kopplungszustand derart angeordnet, dass die Schutzkappen 5 einen geringfügigen Abstand aufweisen und sich dabei nicht berühren. Der Abstand der Leiterplatten 10 quer zu der Verbindungsrichtung S liegt dabei in der Größenordnung der Dicke der Leiterplatten 10 und beträgt zwischen 1 bis 10 mm und vorteilhaft etwa 2.5 mm.

Der Abstand der Antennenspulen im gekoppelten Zustand beträgt ca. 2,5mm. Ein kleinerer Abstand wäre vorteilhafter, lässt sich aufgrund der Bauform des Schirmungselements aber nicht einfach herstellen.

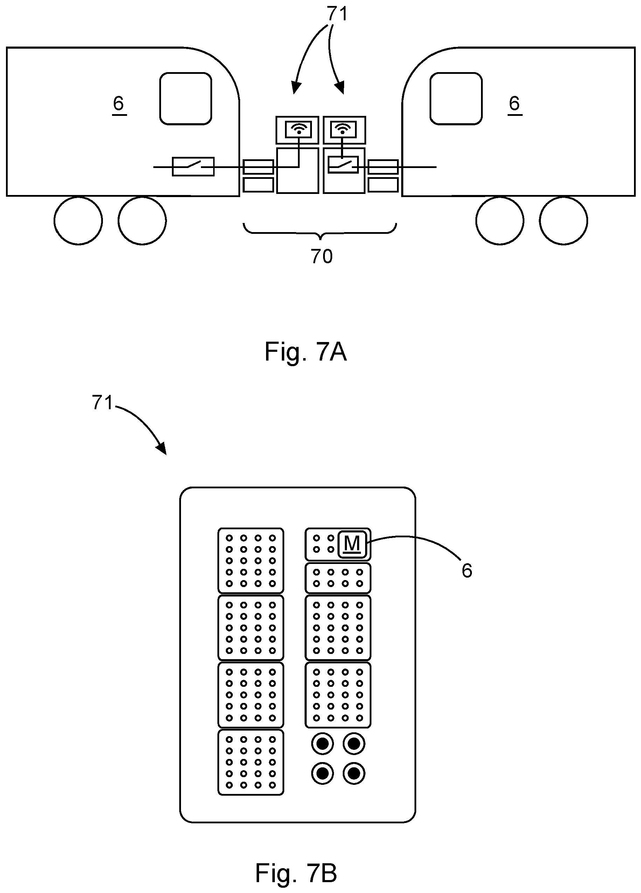

Fig. 7A zeigt eine schematische Darstellung von zwei miteinander verbundenen Zugabschnitten mit einer dazwischen angeordneten Kupplung 70. Die beiden Zugabschnitte enthalten jeweils einen Triebwagen 7. Die Kupplung 70 verbindet die beiden Triebwagen 7 und umfasst dabei zwei Kupplungsteile, die jeweils eine mechanische Kupplung sowie eine Elektrokupplung 71 umfassen, die schematisch in Fig. 7B dargestellt ist.

Sowohl die mechanische Kupplung als auch die Elektrokupplung 71 sind bei modernen Zügen automatisiert betätigbar, um beim Koppeln von Triebwagen mehrerer Zugteile oder auch von Wagen eines Zugteils untereinander sowohl eine mechanische Verbindung herzustellen als auch zur Steuerung benötigte elektrische, hydraulische und/oder pneumatische Verbindungen bereitstellen. Zu diesem Zweck weist die Elektrokupplung 71 üblicherweise eine Vielzahl von Steckverbindungen auf.

In einen geeigneten Modulträger 6 der Elektrokupplung 71 ist mindestens ein vorstehend beschriebenes Modul M integriert, wonach beim Schließen der Kupplung 70 eine hochfrequente Datenübertragung bereitgestellt ist. Die Hochfrequenzkopplung erfolgt dabei durch die Module M, die jeweils in einem Kupplungsteil der Elektrokupplung 71 angeordnet sind.

### Bezugszeichenliste

- 1: Antenne, Nahfeldantenne
- 10: Leiterplatte, PCB
- 101, 102, 103: Bereich
- 11: Signalleitung, Spule
- 111, 112: Abschnitt, Windungsabschnitt
- 12: Referenzmasse
- 13: Abstandselement, Befestigungselement
- 14: Anschluss, Kabelanschluss

- 2: Schirmungselement, Trägerelement
- 20: Öffnung
- 21, 22: Gewindebohrung

- 3: Modulgehäuse, Gehäuse
- 30: Öffnung

- 4: Positionierungselement
- 41: Bohrung
- 42: Ausnehmung, Nut
- 43: Abwinklung

- 5: Abdeckung, Schutzkappe
- 51: Bohrung

- 6: Modulträger, Halterahmen
- 7: Zugteil, Triebwagen
- 70: Kupplung
- 71: Elektrokupplung

- M: Modul
- B1, B2: Rand
- B10: Breite
- L: Längsrichtung
- L10, L2: Länge, Betrag
- S: Verbindungsrichtung, Steckrichtung
- S1, S2: Seite

## Patentansprüche

1. Antenne (1) für eine WLAN Ethernet Datenschnittstelle mit einer rechteckigen Leiterplatte (10) mit
einer Breite (B10) und einer Länge (L10) und einer Längsrichtung (L), und mit
einem ersten (B1) und zweiten (B2) einander gegenüberliegenden breitseitigen Rand, und mit
einem ersten (101) und zweiten Bereich (102), die sich aufeinanderfolgend von dem ersten Rand (B1) zu dem zweiten Rand (B2) erstrecken, und mit
einer ersten (S1) und zweiten (S2) Seite, und mit
einer Signalleitung (11) und einer Referenzmasse (12), die jeweils mittels Leiterbahnen bereitgestellt sind,
wobei
die Signalleitung (11) auf der ersten Seite (S1) in dem zweiten Bereich (102) als planare Spule (11) ausgebildet ist, und wobei der zweite Bereich (102) auf der ersten Seite (S1) einen dritten Bereich (103) zur Bereitstellung eines zur Datenübertragung geeigneten magnetischen Kopplungszustands einer ersten Antenne (1) mit einer baugleichen zweiten Antenne (1) umfasst, der derart ausgebildet ist, dass
der magnetische Kopplungszustand mittels einer benachbarten Anordnung der dritten Bereiche (103) der ersten und zweiten Antenne (1) bereitgestellt ist, wobei
die Antennen (1) in dem Kopplungszustand jeweils um 180° zueinander derart gedreht sind, dass die dritten Bereiche (103) einander benachbart gegenüberliegend zugewandt sind,
wobei
die Spule (11) als spiralförmige Rechteckspule mit wenigstens einer Windung und mit bevorzugt drei bis fünf Windungen ausgebildet ist, und wobei
die Windungen der Spule (11) jeweils wenigstens einen ersten Abschnitt (111) parallel zur Längsrichtung (L) der Leiterplatte (10) und wenigstens einen zweiten Abschnitt (112) quer zu dem ersten Abschnitt (111) aufweisen, und wobei
der dritte Bereich (103) an dem zweiten Rand (B2) angeordnet ist und wenigstens einen zweiten Abschnitt (112) und bevorzugt zwei oder drei zweite Abschnitte (112) der Spule (11) umfasst.

2. Antenne (1) nach Anspruch 1, wobei
die Signalleitung (11) sich auf der ersten Seite (S1) ausgehend von einem an dem ersten Rand (B1) der Leiterplatte (10) angeordneten Kabelanschluss (14) in dem ersten Bereich (101) der Leiterplatte (10) mittig zwischen einer ersten und zweiten Referenzmasse (12) erstreckt, die benachbart zu den beiden längsseitigen Rändern der Leiterplatte (10) angeordnet sind, und wobei
in dem ersten Bereich (101) eine erste Breite der Signalleitung (11), ein Abstand der Signalleitung (11) zu der ersten und zweiten Referenzmasse (12) und eine zweite Breite der Referenzmassen (12) jeweils derart ausgebildet ist, dass der erste Bereich (101) mit der Signalleitung (11) und den Referenzmassen (12) belegt ist.

3. Antenne (1) nach Anspruch 2, wobei
die Signalleitung (11) in dem ersten Bereich (101) der Leiterplatte eine Breite aufweist, die etwa ihrem Abstand zu der ersten und zweiten Referenzmasse (12) entspricht, und wobei
die Breite der Referenzmassen (12) etwa das 1.2 bis 2-Fache und bevorzugt etwa das 1.5-Fache der Breite der Signalleitung (11) entspricht, und wobei
die erste und zweite Referenzmasse (12) flächenhaft in Form eines sich in Längsrichtung (L) der Leiterplatte (10) erstreckenden Rechtecks ausgebildet ist.

4. Antenne (1) nach einem der Ansprüche 1 bis 3, wobei:
die Signalleitung (11) in dem zweiten Bereich (102) der Leiterplatte (10) mittels einer Leiterbahn mit einer Breite von 0.3 mm bis 0.8 mm und bevorzugt von etwa 0.5 mm ausgebildet ist, und wobei
die ersten Abschnitte (111) der Spule (11) jeweils in einem ersten Abstand von 0.1 mm bis 0.5 mm und bevorzugt von etwa 0.3 mm angeordnet sind, und
die zweiten Abschnitte (112) der Spule (11) jeweils in einem zweiten Abstand angeordnet sind, der das 2 bis 10-Fache und bevorzugt das 5-Fache des ersten Abstands beträgt.

5. Antenne (1) nach einem der vorstehenden Ansprüche, wobei
die Signalleitung (11) sich in dem zweiten Bereich (102) mit den Windungen ihrer Spule (11) spiralförmig bis zur Mitte der Spule (11) erstreckt und hieran anschließend auf die zweite Seite (S2) der Leiterplatte (10) führt, und wobei
die Signalleitung (11) sich auf der zweiten Seite (S2) von dem zweiten Bereich (102) mittig bis in den ersten Bereich (101) erstreckt, der benachbart zu dem ersten Rand (B1) der Leiterplatte (10) flächenhaft von einer dritten Referenzmasse (12) belegt ist.

6. Antenne (1) nach einem der vorstehenden Ansprüche, wobei
die Leiterplatte (10) der Antenne (1) in dem ersten (101) Bereich benachbart zu dem ersten Rand (B1) eine erste durchgehende Bohrung durch die erste und dritte Referenzmasse (12) und eine zweite durchgehende Bohrung durch die zweite und dritte Referenzmasse (12) aufweist, und wobei
die erste und zweite Bohrung zusammen mit jeweils einem ersten und zweiten als Metallhülse ausgebildeten Abstandselement (13) zur Montage der Antenne (1) insbesondere in einem Gehäuse vorgesehen sind.

7. Antenne (1) nach einem der vorstehenden Ansprüche, wobei
die Antenne (1) als Nahfeldantenne zur Kopplung in einem Bereich von 2 bis 3 cm ausgelegt ist, wobei
die Antenne (1) eine Impedanz ihres Kabelanschlusses von 50 Ω aufweist und für einen Frequenzbereich von 5 GHz mit einer Übertragungsrate von 450 MBit/s ausgelegt ist, und wobei
die Antenne (1) zur Bereitstellung einer WLAN Ethernet Datenschnittstelle geeignet ausgebildet ist.

8. Modul (M) mit integrierter WLAN Ethernet Datenschnittstelle mit einem Gehäuse (3), einem Schirmungselement (2), einem Positionierungselement (4) und/oder einer Schutzkappe (5) und mit einer auf einer Leiterplatte (10) ausgebildeten planaren Antenne (1)mit einer Signalleitung (11) und einer Referenzmasse (12), zum Einsatz in einen Modulträger (6), wobei
die Antenne (1) derart in dem Modul (M) angeordnet ist und dabei um einen vorbestimmten Betrag (L2) aus einer Öffnung (20) des Moduls (M) herausragt, dass
mittels eines ersten Moduls (M) mit einer ersten Antenne (1) und eines um 180° gedrehten zweiten baugleichen Moduls (M) mit einer zweiten Antenne (1), das in einer Ebene benachbart zu dem ersten Modul (M) angeordnet ist, ein magnetischer Kopplungszustand der Signalleitungen (11) der Antennen (1) mittels einer benachbarten Anordnung der ersten und zweiten Antenne (1) bereitgestellt ist.

9. Modul (M) nach Anspruch 8, wobei
die Antenne (1) mit ihrer Leiterplatte (10) von einem zentralen Bereich der Öffnung (20, 30) beabstandet ist, und
die Leiterplatte (10) parallel zu der Ebene der Module (M) angeordnet ist.

10. Modul (M) nach Anspruch 8 oder 9, wobei
das Schirmungselement (2) aus Metall besteht und elektrisch mit der Referenzmasse (12) der Antenne (1) und einer Referenzmasse eines Kabelanschlusses (14) der Antenne (1) verbunden ist.

11. Modul (M) nach einem der Ansprüche 8 bis 10, wobei
das Gehäuse (3) aus Kunststoff besteht und eine Innenkontur aufweist, die mit einer Außenkontur des Schirmungselements (2) formschlüssig derart zusammenwirkt, dass das Schirmungselement (2) in dem Gehäuse (3) beherbergt und gehalten ist, und wobei das Gehäuse (3) eine Außenkontur aufweist, die mit einer Kontur des Modulträgers (6) korrespondiert.

12. Modul (M) nach einem der Ansprüche 8 bis 11 zur Verwendung zusammen mit weiteren baugleichen Modulen (M) und/oder weiteren Modulen in einem Steckverbinder, wobei
der Modulträger (6) ein Halterahmen (6) des Steckverbinders ist.

13. Modul (M) nach einem der Ansprüche 8 bis 12 zur Verwendung zusammen mit weiteren baugleichen Modulen (M) und/oder weiteren Modulen in einer Elektrokupplung (71) eines Kupplungsteils einer Kupplung (70), die zwischen zwei miteinander verbundenen Zugabschnitten vorgesehen ist, wobei
der Modulträger (6) Bestandteil der Elektrokupplung (71) ist.

14. Modul (M) nach einem der Ansprüche 8 bis 13 wobei die Antenne (1) durch eine Antenne nach einem der Ansprüche 1 bis 7 gebildet ist.

## Claims

1. Antenna (1) for a WLAN Ethernet data interface, having
a rectangular printed circuit board (10) with a width (B10) and a length. (L10) and a longitudinal direction (L), and with
a first broad-side edge (B1) and a second broad-side edge (B2) situated opposite each other, and with a first region (101) and a second region (102) which extend in succession from the first edge (B1) to the second edge (B2), and with
a first side (S1) and a second side (S2), and with a signal line (11) and a reference ground (12) which are both provided by means of conductor tracks,
wherein
the signal line (11) is designed as a planar coil (11) on the first side (S1) in the second region (102), and wherein
the second region (102), on the first side (S1), comprises a third region (103) for providing a magnetic coupling state, which is suitable for data transfer, of a first antenna (1) with a structurally identical second antenna (1), which third region is designed in such a way that
the magnetic coupling state is provided by means of an adjacent arrangement of the third regions (103) of the first and the second antenna (1), wherein
the antennas (1) are each rotated through 180° in relation to one another in the coupling state in such a way that the third regions (103) face one another adjacently and oppositely,
wherein
the coil (11) is designed as a spiral rectangular coil with at least one turn and with preferably three to five turns, and wherein
the turns of the coil (11) each have at least one first section (111) parallel to the longitudinal direction (L) of the printed circuit board (10) and at least one second section (112) transverse to the first section (111), and wherein
the third region (103) is arranged at the second edge (B2) and comprises at least one second section (112) and preferably two or three second sections (112) of the coil (11).

2. Antenna (1) according to Claim 1, wherein
the signal line (11) extends, on the first side (S1), starting from a cable connection (14) which is arranged at the first edge (B1) of the printed circuit board (10), in the first region (101) of the printed circuit board (10) centrally between a first and a second reference ground (12) which are arranged adjacent to the two longitudinal-side edges of the printed circuit board (10), and wherein,
in the first region (101), a first width of the signal line (11), a spacing of the signal line (11) from the first and the second reference ground (12) and a second width of the reference grounds (12) are each designed in such a way that the first region (101) is populated by the signal line (11) and the reference grounds (12).

3. Antenna (1) according to Claim 2, wherein
the signal line (11) has, in the first region (101) of the printed circuit board, a width which corresponds to approximately its spacing from the first and the second reference ground (12), and wherein
the width of the reference grounds (12) corresponds to approximately 1.2 to 2 times and preferably approximately 1.5 times the width of the signal line (11), and wherein the first and the second reference ground (12) are areally designed in the form of a rectangle extending in the longitudinal direction (L) of the printed circuit board (10).

4. Antenna (1) according to one of Claims 1 to 3, wherein:
the signal line (11), in the second region (102) of the printed circuit board (10), is formed by means of a conductor track with a width of from 0.3 mm to 0.8 mm and preferably of approximately 0.5 mm, and wherein
the first sections (111) of the coil (11) are each arranged with a first spacing of from 0.1 mm to 0.5 mm and preferably of approximately 0.3 mm, and
the second sections (112) of the coil (11) are each arranged with a second spacing which is 2 to 10 times and preferably 5 times the first spacing.

5. Antenna (1) according to one of the preceding claims, wherein
the signal line (11) extends, in the second region (102), with the turns of its coil (11) in a spiral as far as the centre of the coil (11) and then runs onto the second side (S2) of the printed circuit board (10), and wherein the signal line (11) extends, on the second side (S2),
from the second region (102) centrally as far as into the first region (101) which, adjacent to the first edge (B1) of the printed circuit board (10), is areally populated by a third reference ground (12).

6. Antenna (1) according to one of the preceding claims, wherein
the printed circuit board (10) of the antenna (1) has, in the first region (101) adjacent to the first edge (B1), a first continuous hole through the first and the third reference ground (12) and a second continuous hole through the second and the third reference ground (12), and wherein
the first and the second hole are, together with in each case one first and one second spacer element (13), which are designed as metal sleeves, for assembling the antenna (1), provided, in particular, in a housing.

7. Antenna (1) according to one of the preceding claims, wherein
the antenna (1) is designed as a near-field antenna for coupling in a range of from 2 to 3 cm, wherein
the antenna (1) has an impedance at its cable connection of 50 Ω and is designed for a frequency band of 5 GHz with a transfer rate of 450 Mbit/s, and wherein
the antenna (1) is designed to be suitable for providing a WLAN Ethernet data interface.

8. Module (M) with an integrated WLAN Ethernet data interface, having a housing (3), a shielding element (2), a positioning element (4) and/or a protective cap (5) and having a planar antenna (1) which is formed on a printed circuit board (10) and has a signal line (11) and a reference ground (12), for use in a module support (6), wherein
the antenna (1) is arranged in the module (M) and in the process projects out of an opening (20) in the module (M) by a predetermined amount (L2) in such a way that,
by means of a first module (M) with a first antenna (1) and a second structurally identical module (M) which is rotated through 180° and has a second antenna (1) and is arranged adjacent to the first module (M) in one plane, a magnetic coupling state of the signal lines (11) of the antennas (1) is provided by means of an adjacent arrangement of the first and the second antenna (1).

9. Module (M) according to Claim 8, wherein
the antenna (1), by way of its printed circuit board (10), is spaced apart from a central region of the opening (20, 30), and
the printed circuit board (10) is arranged parallel to the plane of the modules (M).

10. Module (M) according to Claim 8 or 9, wherein
the shielding element (2) consists of metal and is electrically connected to the reference ground (12) of the antenna (1) and a reference ground of a cable connection (14) of the antenna (1).

11. Module (M) according to one of Claims 8 to 10, wherein
the housing (3) consists of plastic and has an inner contour which interacts in a positively locking manner with an outer contour of the shielding element (2) in such a way that the shielding element (2) is accommodated and held in the housing (3), and wherein
the housing (3) has an outer contour which corresponds to a contour of the module support (6).

12. Module (M) according to one of Claims 8 to 11 for use together with further structurally identical modules (M) and/or further modules in a plug-in connector, wherein
the module support (6) is a holding frame (6) of the plug-in connector.

13. Module (M) according to one of Claims 8 to 12 for use together with further structurally identical modules (M) and/or further modules in an electric coupler (71) of a coupler part of a coupler (70) which is provided between two train sections that are connected to each other, wherein
the module support (6) is a constituent part of the electric coupler (71).

14. Module (M) according to one of Claims 8 to 13, wherein the antenna (1) is formed by an antenna according to one of Claims 1 to 7.

## Revendications

1. Antenne (1) pour une interface de données, Ethernet WLAN, comprenant
une carte à circuit imprimé rectangulaire (10) avec une largeur (B10) et une longueur (L10) et une direction longitudinale (L), et avec
un premier (B1) et un deuxième (B2) bord côté largeur opposés l'un à l'autre, et avec
une première zone (101) et une deuxième zone (102) qui s'étendent successivement du premier bord (B1) au deuxième bord (B2), et avec
un premier (S1) et un deuxième (S2) côté, et avec une ligne de signal (11) et une masse de référence (12), qui sont respectivement fournies au moyen de pistes conductrices,
la ligne de signal (11) étant réalisée sur le premier côté (S1) dans la deuxième zone (102) sous la forme d'une bobine plane (11), et
la deuxième zone (102) sur le premier côté (S1) comportant une troisième zone (103) destinée à fournir un état de couplage magnétique adapté à la transmission de données entre une première antenne (1) et une deuxième antenne (1) de construction identique, qui est configurée de telle sorte que
l'état de couplage magnétique est fourni au moyen d'une disposition adjacente des troisièmes zones (103) des première et deuxième antennes (1),
les antennes (1) étant respectivement tournées de 180° l'une par rapport à l'autre dans l'état de couplage, de telle sorte que les troisièmes zones (103) adjacentes l'une à l'autre se fassent face en vis-à-vis et,
la bobine (11) étant réalisée sous la forme d'une bobine rectangulaire en forme de spirale avec au moins une spire et de préférence trois à cinq spires, et
les spires de la bobine (11) possédant respectivement au moins une première portion (111) parallèle à la direction longitudinale (L) de la carte. à circuit imprimé (10) et au moins une deuxième portion (112) transversale à la première portion (111), et
la troisième zone (103) étant disposée au niveau du deuxième bord (B2) et comprenant au moins une deuxième portion (112) et de préférence deux ou trois deuxièmes portions (112) de la bobine (11).

2. Antenne (1) selon la revendication 1,
la ligne de signal (11) s'étendant sur le premier côté (S1) à partir d'une borne de câble (14) disposée sur le premier bord (B1) de la carte à circuit imprimé (10) dans la première zone (101) de la carte à circuit imprimé (10), au centre entre une première et une deuxième masse de référence (12) qui sont disposées adjacentes aux deux bords côté long de la carte à circuit imprimé (10), et
dans la première zone (101), une première largeur de la ligne de signal (11), une distance entre la ligne de signal (11) et les première et deuxième masses de référence (12) et une deuxième largeur des masses de référence (12) étant respectivement configurées de telle sorte que la première zone (101) est occupée par la ligne de signal (11) et les masses de référence (12).

3. Antenne (1) selon la revendication 2,
la ligne de signal (11) dans la première zone (101) de la carte à circuit imprimé présentant une largeur qui correspond approximativement à sa distance par rapport à la première et à la deuxième masse de référence (12), et la largeur des masses de référence (12) correspondant à environ 1,2 à 2 fois, et de préférence à environ 1,5 fois la largeur de la ligne de signal (11), et
les première et deuxième masses de référence (12) étant réalisées sous la forme d'un rectangle qui s'étend dans la direction longitudinale (L) de la carte à circuit imprimé (10).

4. Antenne (1) selon l'une des revendications 1 à 3 :
la ligne de signal (11) dans la deuxième zone (102) de la carte à circuit imprimé (10) étant réalisée au moyen d'une piste conductrice ayant une largeur de 0,3 mm à 0,8 mm, et de préférence d'environ 0,5 mm, et
les premières portions (111) de la bobine (11) étant respectivement disposées à une première distance de 0,1 mm à 0,5 mm, de préférence d'environ 0,3 mm, et
les deuxièmes portions (112) de la bobine (11) étant respectivement disposées à une deuxième distance qui est de 2 à 10 fois, et de préférence de 5 fois la première distance.

5. Antenne (1) selon l'une des revendications précédentes,
la ligne de signal (11) s'étendant dans la deuxième zone (102) avec les spires de sa bobine (11) en forme de spirale jusqu'au centre de la bobine (11) et menant ensuite de là sur le deuxième côté (S2) de la carte à circuit imprimé (10), et
la ligne de signal (11) s'étendant sur le deuxième côté (S2) depuis la deuxième zone (102) au centre jusqu'à la première zone (101), qui est occupée en surface, de manière adjacente au premier bord (B1) de la carte à circuit imprimé (10), par une troisième masse de référence (12).

6. Antenne (1) selon l'une des revendications précédentes,
la carte à circuit imprimé (10) de l'antenne (1) possédant dans la première zone (101), de manière adjacente au premier bord (B1), un premier trou traversant à travers les première et troisième masses de référence (12) et un deuxième trou traversant à travers les deuxième et troisième masses de référence (12), et
le premier et le deuxième trou sont prévus conjointement avec respectivement un premier et deuxième éléments d'écartement (13) réalisés sous la forme de douilles métalliques servant au montage de l'antenne (1), notamment dans un boîtier.

7. Antenne (1) selon l'une des revendications précédentes,
l'antenne (1) étant conçue comme une antenne à champ proche pour le couplage dans une plage de 2 à 3 cm,
l'antenne (1) présentant une impédance de sa borne de câble de 50 Ω et étant conçue pour une plage de fréquences de 5 GHz avec un débit de transmission de 450 Mbit/s, et
l'antenne (1) étant configurée pour la fourniture d'une interface de données Ethernet WLAN.

8. Module (M) pourvu d'une interface de données Ethernet WLAN intégrée, comprenant un boîtier (3), un élément de blindage (2), un élément de positionnement (4) et/ou un capuchon de protection (5) et comprenant une antenne (1) plane formée sur une carte à circuit imprimé (10) avec une ligne de signal (11) et une masse de référence (12), pour une utilisation dans un porte-module (6),
l'antenne (1) étant disposée dans le module (M) de telle sorte qu'elle fait saillie d'une valeur prédéterminée (L2) hors d'une ouverture (20) du module (M), de sorte que
au moyen d'un premier module (M) pourvu d'une première antenne (1) et d'un deuxième module (M) de construction identique, tourné de 180°, pourvu d'une deuxième antenne (1), qui est disposé dans un plan adjacent au premier module (M), un état de couplage magnétique des lignes de signal (11) des antennes (1) est fourni au moyen d'une disposition adjacente des première et deuxième antennes (1).

9. Module (M) selon la revendication 8,
l'antenne (1) avec sa carte à circuit imprimé (10) étant espacée d'une zone centrale de l'ouverture (20, 30), et la carte à circuit imprimé (10) étant disposée parallèlement au plan des modules (M).

10. Module (M) selon la revendication 8 ou 9,
l'élément de blindage (2) étant constitué de métal et étant relié électriquement à la masse de référence (12) de l'antenne (1) et à une masse de référence d'une borne de câble (14) de l'antenne (1).

11. Module (M) selon l'une des revendications 8 à 10,
le boîtier (3) étant constitué de matière plastique et présentant un contour intérieur qui coopère par complémentarité de forme avec un contour extérieur de l'élément de blindage (2) de telle sorte que l'élément de blindage (2) est logé et maintenu dans le boîtier (3), et
le boîtier (3) présentant un contour extérieur qui correspond à un contour du porte-module (6).

12. Module (M) selon l'une des revendications 8 à 11, destiné à être utilisé conjointement avec des modules (M) de construction identique supplémentaires et/ou des modules supplémentaires dans un connecteur enfichable,
le porte-module (6) étant un cadre de maintien (6) du connecteur enfichable,

13. Module (M) selon l'une des revendications 8 à 12, destiné à être utilisé conjointement avec des modules (M) de construction identique supplémentaires et/ou des modules supplémentaires dans un accouplement électrique (71) d'une partie d'accouplement d'un accouplement (70) qui est prévu entre deux portions de traction reliées entre elles,
le porte-module (6) faisant partie intégrante de l'accouplement électrique (71).

14. Module (M) selon l'une des revendications 8 à 13, l'antenne (1) étant formée par une antenne selon l'une des revendications 1 à 7.
